# EUROPÄISCHE PATENTSCHRIFT

(11) **EP 0 696 098 B1**
(45) Veröffentlichungstag und Bekanntmachung des Hinweises auf die Patenterteilung: **03.11.1999**
(21) Anmeldenummer: 95111869.4
(22) Anmeldetag: 27.07.1995
(51) Int. Cl.: H02G 3/06

(54) **Koppelzwischenstück für eine Koppelvorrichtung für Leitungsaufnahmekanäle**
Intermediate coupling piece for a coupling device for cable ducts
Element intermédiaire de couplage pour dispositif de couplage pour canalisations de guidage de câbles

(30) Priorität: 03.08.1994 DE 9412536 U
(43) Veröffentlichungstag der Anmeldung: 07.02.1996
(73) Patentinhaber: Kabelschlepp Gesellschaft mit beschränkter Haftung, 57074 Siegen (DE)
(72) Erfinder: Haftmann, Johannes, D-91126 Rednitzhembach (DE)
(74) Vertreter: Kahlhöfer, Hermann, Dipl.-Phys.

(56) Entgegenhaltungen:
- EP-A- 0 490 022
- DE-A- 3 014 695
- DE-A- 4 003 992
- DE-U- 7 015 776

## Beschreibung

Die Erfindung bezieht sich auf ein Koppelzwischenstück für eine Koppelvorrichtung für Leitungsaufnahmekanäle, in welche Leitungen und/oder Kabel zu deren Führung einlegbar sind, gemäß dem Oberbegriff des Anspruchs 1.

Es ist häufig erforderlich, Leitungen und/oder Kabel, beispielsweise elektrische oder optische Leitungen oder Kabel, in Leitungsaufnahmekanälen zu führen, in welche die Leitungen oder Kabel einlegbar sind. Dabei kann es sich um fest verlegte und feststehende Leitungsaufnahmekanäle handeln oder um bewegliche Leitungsaufnahmekanäle, beispielsweise als Ersatz von Schleppketten, die sich zwischen einer feststehenden und einer beweglichen Einrichtung befinden und die mindestens über einen Teil ihrer Länge zusammen mit der beweglichen Einrichtung mitbewegbar sind.

Beispiele für derartige Leitungsaufnahmekanäle zeigen die EP-A-0 490 022 und die deutsche Patentanmeldung P 43 08901.

Derartige Leitungsaufnahmekanäle dienen zur Verbindung zwischen zwei voneinander beabstandeten Einrichtungen in einer geraden Richtung.

Durch die DE-A-30 14 695 ist eine Koppelvorrichtung für Leitungsaufnahmekanäle, in die Leitungen und/oder Kabel zu deren Führung einlegbar sind, bekannt. Die Koppelvorrichtung weist komplementär durch Ineinanderstecken miteinander verrastbare Koppelelemente auf. Das Koppelelement weist ein Aufnahmekoppelelement mit mindestens einer Stecktasche sowie ein Steckkoppelelement mit mindestens einer in der Stecktasche aufnehmbaren Stecklasche auf.

Derartige Leitungsaufnahmekanäle werden üblicherweise vom Hersteller solcher Leitungsaufnahmekanäle in der für die spezielle Anwendung erforderlichen Länge hergestellt. Der Anwender hat keine eigene Gestaltungsmöglichkeit. Insbesondere ist es mit den herkömmlichen Leitungsaufnahmekanälen nicht möglich, Abwinkelungen und Umlenkungen der Leitungsaufnahmekanäle oder gar Abzweigungen und Kreuzungen von Leitungsaufnahmekanälen herzustellen.

Mit der vorliegenden Erfindung wird es dem Anwender ermöglicht, ein Leitungsaufnahmekanalsystem nach seinen speziellen Anforderungen herzustellen, das an gewünschten Stellen Abwinkelungen, Umlenkungen, Abzweigungen, Kreuzungen oder dergleichen aufweisen kann.

Dies wird erfindungsgemäß mit einem gattungsgemäßen Koppelzwischenstück für eine Koppelvorrichtung für Leitungsaufnahmekanäle erreicht, das die kennzeichnenden Merkmale des Anspruchs 1 aufweist.

Besonders große Gestaltungsmöglichkeit erreicht man, wenn man den Leitungsaufnahmekanal aus mehreren Leitungsaufnahmekanalstücken zusammensetzt, die an ihren freien Enden mit je einem Koppelelement versehen sind. Sind die einzelnen Leitungsaufnahmekanalstücke an ihren entgegengesetzten freien Enden mit Koppelelementen unterschiedlicher Art versehen, also mit einer Stecktasche am einen Ende und einer Stecklasche am anderen Ende, kann man aus diesen Leitungsaufnahmekanalstücken einen Leitungsaufnahmekanal ohne Zwischenschaltung von Koppelstücken herstellen. Man kann aber auch an beiden freien Enden der Leitungsaufnahmekanalstücke Koppelelemente gleicher Art vorsehen, also entweder nur Stecklaschen oder nur Stecktaschen. In diesem Fall werden einzelne Leitungsaufnahmekanalstücke mittels zwischen ihnen angeordneten Koppelstücken miteinander verbunden.

Die Koppelstücke können an verschiedenen Seiten mit gleichen oder mit gegensätzlichen Koppelelementen versehen sein, je nach dem, ob sie Leitungsaufnahmekanäle oder Leitungsaufnahmekanalstücke gleicher oder gegensätzlicher Koppelelemente miteinander koppeln sollen. Die Koppelstücke können als Winkel ausgebildet sein und sie können ihrerseits mittels Koppelzwischenstücken aneinander koppelbar sein, um mit mehreren solchen Winkelkoppelstücken verschiedene Winkelkonfigurationen, insbesondere Umlenkungen und T-Stücke sowie Abzweigungen und Kreuzungen von Leitungsaufnahmekanälen herzustellen.

Versieht man ein Koppelstück mit einem Ringplattenteil mit einer mindestens teilringförmigen Nut, einem von dem Ringplattenteil wegstehenden Stegteil, an dem eine Stecklasche oder eine Stecktasche vorgesehen ist, und mindestens einem separaten Trägerteil, das einen Endes mit einem in die Nut passenden und in der Nut verschiebbaren Winkelfortsatz und anderen Endes mit einer Stecktasche oder einer Stecklasche versehen ist, kann man ein stufenlos auf unterschiedliche Winkel einstellbares Koppelstück verfügbar machen, mit dem sich Winkelkonfigurationen und Abzweigungen von Leitungsaufnahmekanälen mit vom Anwender wählbaren Winkeln herstellen lassen.

Die Stecktaschen und Stecklaschen werden mit zusammenwirkenden, komplementären Rastelementen ausgerüstet, um sie durch Ineinanderstecken und dabei erfolgendes Verrasten einfach miteinander verbinden zu können. Zu diesem Zweck können die Stecktaschen mit Rastöffnungen und die Stecklaschen mit Rastvorsprüngen versehen sein, welche in die Rastöffnungen einschnappen können. Hierbei ist mindestens entweder die Stecktasche oder die Stecklasche oder der Rastvorsprung federnd nachgiebig ausgebildet, so daß ein federndes Verrasten der Rastelemente miteinander möglich ist. Vorzugsweise werden die Rastelemente derart ausgebildet, daß sie leicht voneinander lösbar sind.

Bei einer besonders bevorzugten Ausführungsform sind die Stecklaschen mit Rastzungen versehen, die in einer der Zusammensteckrichtung entgegengesetzten Richtung schräg von der Stecklasche hochstehen. Besonders vorteilhaft ist es, diese Rastzungen aus den Stecklaschen freizuschneiden. Beim Zusammenstecken geben die Rastzungen zunächst federnd nach und rasten dann in die Rastöffnungen ein.

Bei derart ausgebildeten Stecklaschen ist es für den Anwender einfach, Leitungsaufnahmekanäle in Form von Meterware, beispielsweise der eingangs angegebenen bekannten Formen, auf die gewünschte Länge zu schneiden und dabei an dem Schnittende Stecklaschen mit Rastzungen freizustanzen.

Die Erfmdung macht desweiteren Koppelemente für eine erfindungsgemäße Koppelvorrichtung sowie einen eine solche Koppelvorrichtung aufweisenden Leitungsaufnahmekanal verfügbar.

Weitere Ausgestaltungen und Weiterbildungen der Erfindung ergeben sich aus den Ansprüchen.

Bei den Leitungsaufnahmekanälen mit erfindungsgemäßer Koppelvorrichtung kann es sich um feststehende oder um bewegliche Leitungsaufnahmekanäle handeln. Bewegliche Leitungsaufnahmekanäle werden zunehmend als Schleppkettenersatz verwendet und sind einen Endes mit einer feststehenden und anderen Endes mit einer hin- und herbeweglichen Einrichtung verbunden. Die erfindungsgemäße Koppelrichtung ist für beide Arten von Leitungsaufnahmekanälen geeignet.

Die Erfindung wird nun anhand von Ausführungsformen näher erläutert. In den beiliegenden Zeichnungen zeigen:
Fig. 1 eine erste Ausführungsform eines Leitungsaufnahmekanals mit einem Steckkoppelelement in Form einer Stecklasche am freien Ende;
Fig. 2 eine zweite Ausführungsform eines Leitungsaufnahmekanals mit einer Stecklasche am freien Ende;
Fig. 3 eine erste Ausführungsform eines geraden Koppelstückes mit je einer Stecktasche an zwei entgegengesetzten Enden;
Fig. 4 ein Winkelstück mit Stecktaschen an drei verschiedenen Seiten;
Fig. 5 eine zweite Ausführungsform eines geraden Koppelstücks;
Fig. 6 eine erste Ausführungsform eines Zugentlastungselementes;
Fig. 7A eine zweite Ausführungsform eines Zugentlastungselementes;
Fig. 7B ein Winkelstück mit Rastgegenrippe;
Fig. 7C das in Figur 7A gezeigte Zugentlastungselement, gekoppelt mit einem Winkelstück gemäß Figur 7B;
Fig. 7D eine Schnittansicht der Anordnung nach Fig. 7C längs der Schnittlinie D-D in Fig, 7C;
Fig. 8 ein gerades Zwischenkoppelstück mit zwei Stecklaschenenden;
Fig. 9 ein Winkelkoppelstück mit zwei Stecktaschen an entgegengesetzten Enden;
Fig. 10 ein gerades Koppelstück gemäß Figur 5 und ein Winkelkoppelstück gemäß Figur 9 vor deren Zusammenstecken;
Fig. 11 eine Ringkoppelvorrichtung;
Fig. 12 ein kanalförmiges Wendekoppelstück;
Fig. 13 ein Formteil, aus dem das Wendekoppelstück gemäß Figur 12 durch Falten montierbar ist; und
Figuren 14 bis 20 verschiedene Koppelkonfigurationen, die sich mit in vorausgehenden Figuren gezeigten Koppelstücken und Koppelzwischenstücken herstellen lassen.

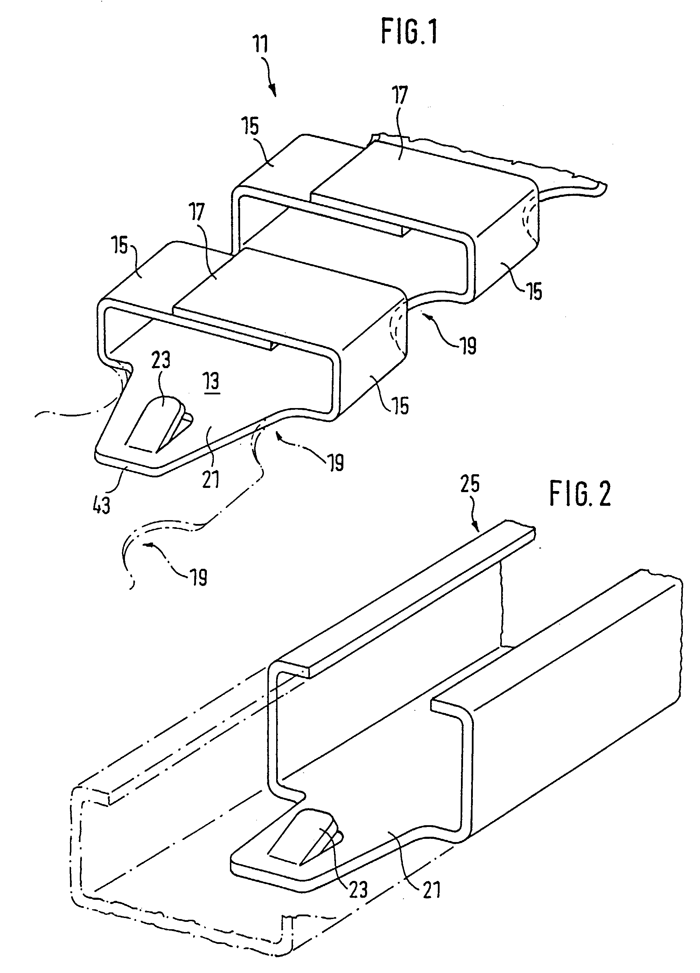

Figur 1 zeigt eine erste Ausführungsform eines Leitungsaufnahmekanals 11 der in der nicht vorveröffentlichten deutschen Patentanmeldung P 43 08901.1 gezeigten Art, der als flacher Rechteckkanal ausgebildet ist. Dabei steht von beiden Längesseiten eines Kanalbodens 13 eine Vielzahl von Rechtecklaschen 15 hoch, die in Kanallängsrichtung in gleichen Abständen voneinander angeordnet sind und deren freie Enden zur Bildung einer Kanaldecke in sich überlappender Weise abgewinkelt sind. Zwischen benachbarten Rechtecklaschen 15 befinden sich halbkreisförmige Aussparungen 19, die einerseits ein Umbiegen des Kanalbodens 13 erleichtern und andererseits im Bereich der freien Enden des Leitungsaufnahmekanals 11 für die Montage von (nicht in den vorliegenden Zeichnungen aber in der deutschen Patentanmeldung P 43 08901.1 gezeigten) Halterungen zur Halterung des Endes des Leitungsaufnahmekanals dienen. Der Einfachheit halber sind in Figur 1 nur zwei Paare von Rechtecklaschen 15 gezeigt. In Wirklichkeit weist ein Leitungsaufnahmekanal üblicher Länge eine Vielzahl weiterer solcher in Kanallängsrichtung aufeinanderfolgender Rechtecklaschenpaare auf.

An dem in Figur 1 linken Ende steht vom Kanalboden 13 eine Stecklasche 21 ab, die eine geringere Breite als der Kanalboden 13 besitzt und in Steckrichtung eine abnehmende Breite aufweist. Aus der Stecklasche 21 ist eine Rastzunge 23 freigeschnitten, die entgegengesetzt zur Steckrichtung schräg von der Stecklasche 21 hochsteht und aus federnd nachgiebigem Material besteht.

Die Stecklasche 21 hat am Ort ihrer Anbindung an den Kanalboden 13 eine geringere Breite als der Kanalboden 13. Ihre Längsmittellinie fällt mit der Längsmittellinie des Kanalbodens 13 zusammen. Die Kopplung mittels dieser Stecklasche 21 erfolgt somit in der Symmetrieachse des Kanalbodens 13, so daß die Kopplung nicht von der Kanalbreite oder der Kanalhöhe des Leitungsaufnahmekanals 11 abhängt.

Der Leitungsaufnahmekanal 11 kann bereits beim Hersteller mit der Stecklasche 21 versehen werden. Es besteht aber auch die Möglichkeit, daß der Leitungsaufnahmekanal 11 erst vom Anwender auf die gewünschte Länge geschnitten wird und daß bei diesem Schnittvorgang am Schnittende die Stecklasche 21 mit der Rastzunge 23 gestanzt wird. Die Verformung der Rastzunge 23 derart, daß sie schräg von der Stecklasche 21 hochsteht, kann je nach dem, aus welchem Material der Leitungsaufnahmekanal 11 besteht, durch Verbiegen, Erwärmen, chemisches Anlösen oder dergleichen erfolgen.

In Figur 1 ist vom linken Ende des Leitungsaufnahmekanals 11 ausgehend gestrichelt dessen Fortsetzung angedeutet. Damit wird die Möglichkeit angedeutet, einen Leitungsaufnahmekanal 11 als Meterware zu verwenden und seitens des Anwenders auf die gewünschte Länge zu schneiden und dabei die Stecklasche 21 zu stanzen.

Figur 2 zeigt eine zweite Ausführungsform eines Leitungsaufnahmekanals 25, der in etwa Figur 24 der bereits genannten EP-A-0 490 022 entspricht und nach Einlegen von Leitungen und/oder Kabeln mittels in Figur 2 nicht dargestellter Querspangen in seinem Deckenbereich geschlossen werden kann. Am in Figur 2 linken Ende ist dieser Leitungsaufnahmekanal 25 mit einer gleichen Stecklasche 21 mit Rastzunge 23 versehen wie der in Figur 1 gezeigte Leitungsaufnahmekanal 11. Auch in diesem Fall kann der Leitungsaufnahmekanal 25 seitens des Anwenders auf die gewünschte Länge geschnitten werden, unter Ausstanzen der Stecklasche 21 und der Rastzunge 23. Auch in Figur 2 ist wieder durch gestrichelte Linien, die über das linke Ende des Leitungsaufnahmekanals 25 hinausgehen, angedeutet, daß dieser Leitungsaufnahmekanal 25 von einer Meterware abgeschnitten und dabei dessen Stecklasche 21 freigestanzt worden ist.

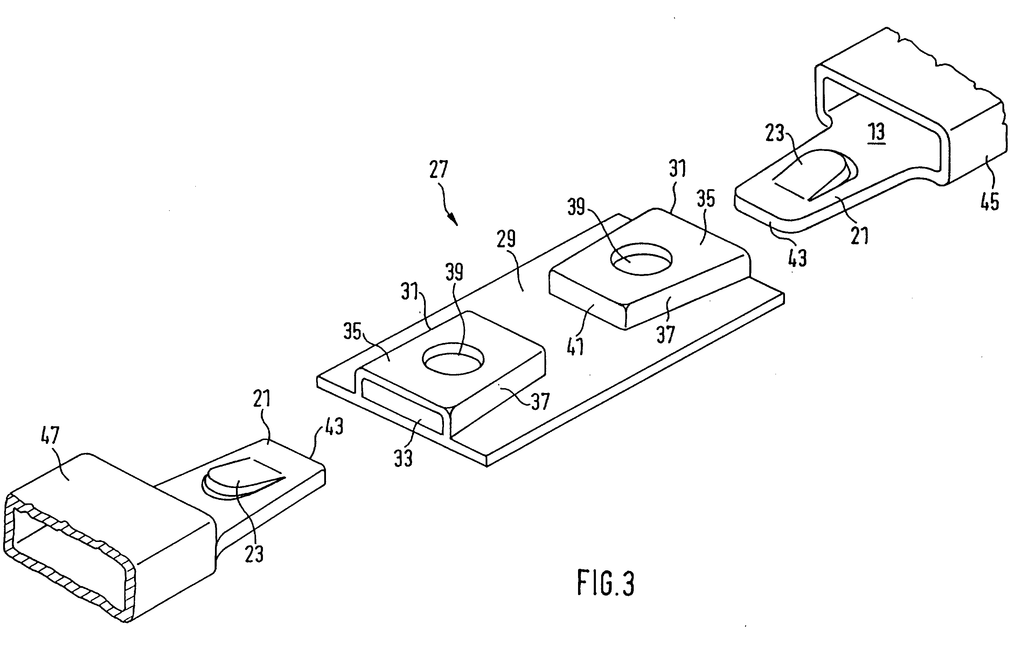

Figur 3 zeigt eine erste Ausführungsform eines geraden Koppelstücks 27 mit einer länglichen rechteckigen Grundplatte 29, an deren beiden Längsenden sich je eine Stecktasche 31 befindet. Jede Stecktasche weist einen durch die Grundplatte 29 gebildeten Taschenboden 33, eine dazu parallele, im Abstand von der Grundplatte 29 verlaufende Taschendecke 35 und die Seiten von Taschenboden 33 und Taschendecke 35 verbindende Seitenwände 37 auf. In der Taschendecke 35 einer jeden Stecktasche 31 ist eine vorzugsweise kreisförmige Rastöffnung 39 gebildet. An ihren von den Längsenden der Grundplatte 29 abliegenden Enden sind die Stecktaschen 31 vorzugsweise mit einer Stirnwand 41 geschlossen, um einen Anschlag für das freie Stecklaschenende 43 zu bilden.

In Figur 3 sind im Abstand von beiden Längsenden des Koppelstücks 27 die Stecklaschen 21 je eines nur vage angedeuteten Leitungsaufnahmekanals 45 bzw. 47 gezeigt. Zum Koppeln der beiden Leitungsaufnahmekanäle 45 und 47 werden deren Stecklaschen 21 in die je gegenüberliegende Stecktasche 31 des Koppelstücks 27 gesteckt. Dabei geben die Rastzungen 23 zunächst federnd nach, wenn sie an die Taschendecken 35 stoßen, bis sie die Rastöffnungen 39 erreicht haben und in diese zurückfedern können, unter Verrastung mit den Rastöffnungen 39. Die beiden Leitungsaufnahmkanäle 45 und 47 sind dann mittels des Koppelstücks 27 aneinandergekoppelt.

Ist eine relativ starre Kopplung gewünscht, werden die Innenkonturen der Stecktaschen 31 und die Außenkonturen der Stecklaschen 21 streng komplementär zueinander ausgebildet. Soll eine Schwenkbewegung der gekoppelten Leitungsaufnahmekanäle 45 und 47 in einem Schwenkwinkel in der Ebene der Kanalböden 13 möglich sein, werden die Innenkonturen der Stecktaschen 31 entsprechend größer dimensioniert als die Außenkonturen der Stecklaschen 21.

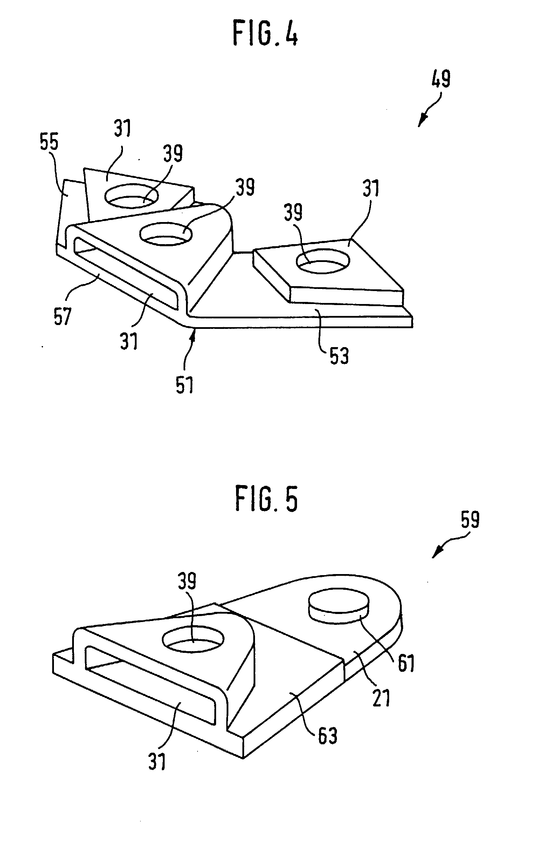

Figur 4 zeigt ein als Winkelstück 49 ausgebildetes Koppelstück mit einer Grundplatte 51, die zwei zueinander rechtwinklig stehende Grundplattenschenkel 53 und 55 aufweist, wobei ein Verbindungsbereich 57 zwischen den beiden Grundplattenschenkeln 53 und 55 abgeschrägt ist. Am freien Ende sowohl eines jeden Grundplattenschenkels 53 und 55 als auch des abgeschrägten Verbindungsbereichs 57 befindet sich je eine Stecktasche 31, deren Aufbau mit dem der Stecktaschen 31 in Figur 3 übereinstimmt.

Mit dem in Figur 4 gezeigten Winkelstück können zwei sich rechtwinkelig zueinander erstreckende Leitungsaufnahmekanäle miteinander gekoppelt werden. Zusätzlich kann über die Stecktasche 31 an die Abschrägung des Verbindungsbereichs 57 ein weiterer Leitungsaufnahmekanal angekoppelt werden.

Figur 5 zeigt eine zweite Ausführungsform eines geraden Koppelstücks 59, das an einem Längsende eine Stecktasche 31 und am anderen Längsende eine Stecklasche 21 aufweist. Bei diesem Koppelstück 59 ist die Stecklasche 21 allerdings nicht mit einer Rastzunge 23 der in den Figuren 1 bis 3 gezeigten Art versehen sondern mit einem kreisförmigen Rastnoppen 61, der von der Rastöffnung 39 einer Stecktasche 31 aufnehmbar ist. Ein derartiger Rastnoppen 61 setzt entweder eine Stecktasche 31 voraus, deren Taschenboden 33 und/oder Taschendecke 35 federn nachgiebig ist, oder die Stecklasche 21 muß gegenüber einer Grundplatte 63 des Koppelstücks 59 federnd nachgiebig sein, wobei die Dicke der Stecklasche 21 geringer ist als die lichte Höhe zwischen Taschenboden 33 und Taschendecke 35, damit beim Einstecken der Stecklasche 21 des Koppelstücks 59 in eine Stecktasche 31 ein federndes Einrasten des Rastnoppens 61 in die Rastöffnung 39 möglich ist. Es kann aber auch der Rastnoppen 61 selbst federnd nachgiebig ausgebildet sein.

Bei Verwendung eines geraden Koppelstücks, beispielsweise der in Figur 3 gezeigten Art, liegen die in den gekoppelten Leitungsaufnahmekanälen befindlichen Leitungen und/oder Kabel auf dem Koppelstück auf.

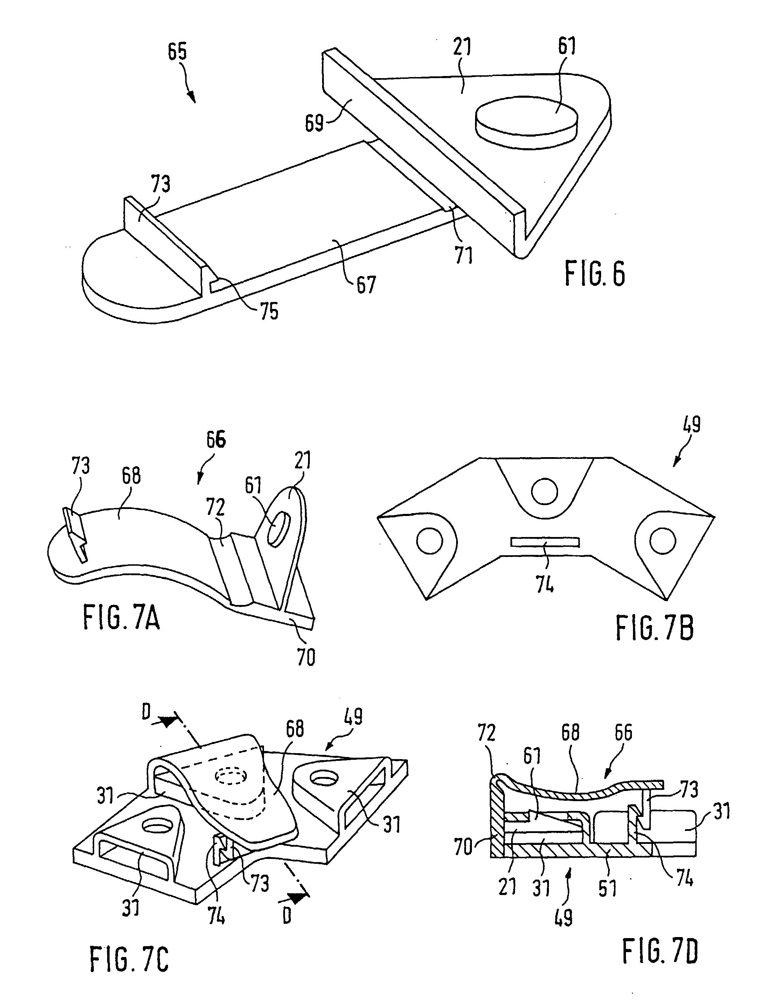

Sind zwei Leitungsaufnahmekanäle jedoch mittels eines Winkelstückes, beispielsweise der in Figur 4 gezeigten Art, gekoppelt, besteht die Gefahr, daß die in den Leitungsaufnahmekanälen befindlichen Leitungen und/oder Kabel im Bereich der Winkelkopplung lose herumflattern. Um dies zu verhindern, kann man ein Zugentlastungselement 65 der in Figur 6 gezeigten Art mit einem Winkelstück 49 koppeln. Das Zugentlastungselement 65 besitzt am einen Ende eine Stecklasche 21 mit einem kreisförmigen Rastnoppen 61 und ist am entgegengesetzten Ende mit einer Zugentlastungslasche 67 versehen. Am Übergangsbereich von Stecklasche 21 und Zugentlastungslasche 67 ist die Stecklasche 21 mit einer von ihr hochstehenden, quer zur Längserstreckung der Zugentlastungslasche 67 verlaufenden Querrippe 69 versehen. In Nachbarschaft dieser Querrippe 69 befindet sich ein Filmscharnier 71, mittels welchem die Zugentlastungslasche 67 scharniermäßig an der Stecklasche 21 angelenkt ist. Im Bereich ihres freien Endes weist die Zugentlastungslasche 67 eine Rastrippe 73 auf, die an ihrem freien Ende mit einem Rastwulst 75 versehen ist.

Ein etwas anderes Zugentlastungselement 66 ist in Fig. 7A gezeigt. Dessen Zugentlastungslasche 68 ist in Längsrichtung (aus der Zeichenebene heraus) konvex gekrümmt. Die Stecklasche 21 steht von einem plattenförmigen Sockel 70, der mit der Zugentlastungslasche 68 über ein Filmscharnier 72 verbunden ist, hoch; und zwar bei gestreckter Zugentlastungslasche 68 etwa in gleicher Richtung wie die Rastrippe 73.

Um eine Zugentlastungsaufgabe bewirken zu können, wird die Stecklasche 21 des Zugentlastungselementes 65 oder 66 in diejenige Stecktasche 31 des Winkelstücks 49 gesteckt, welche sich am schrägen Ende des Verbindungsbereichs 57 der Grundplatte 51 dieses Winkelstücks 49 befindet. Dies ist in Figur 7C gezeigt. Nachdem die beiden sich rechtwinkelig zueinander erstreckenden Leitungsaufnahmekanäle mit den Taschen 31 an den freien Enden der Grundplattenschenkel 53 und 55 verrastet worden sind und die mittels der Leitungsaufnahmekanäle geführten Leitungen und/oder Kabel über das Winkelstück 49 geführt worden sind, wird die Zugentlastungslasche 67 oder 68 aus ihrer gestreckten Stellung, wie sie in Figuren 6 und 7A gezeigt ist, über das Winkelstück 49 und die darauf befindlichen Leitungen und/oder Kabel gebogen und wird die Rastrippe 73 mit einer komplementären Gegenrastrippe 74 am Winkelstück 49 eingerastet. Die über das Winkelstück 49 verlaufenden Leitungen und/oder Kabel werden von da ab von dem Zugentlastungselement 65 oder 66 zugentlastend in ihrer Position gehalten.

Die Querschnittsdarstellung in Fig. 7D zeigt das in das Winkelstück 49 eingerastete Zugentlastungselement 66 mit der Verrastung von Rastrippe 73 und Gegenrastrippe 74. Die Wölbung der Zugentlastungslasche 68 zu der Grundplatte 51 des Winkelstücks 49 hin erlaubt das Festhalten und Zugentlasten unterschiedlich dicker und/oder vieler Leitungen und/oder Kabel.

Bei Bedarf können auch andere Koppelstücke als das Winkelstück 49 mit dem Zugentlastungselement 65 versehen werden.

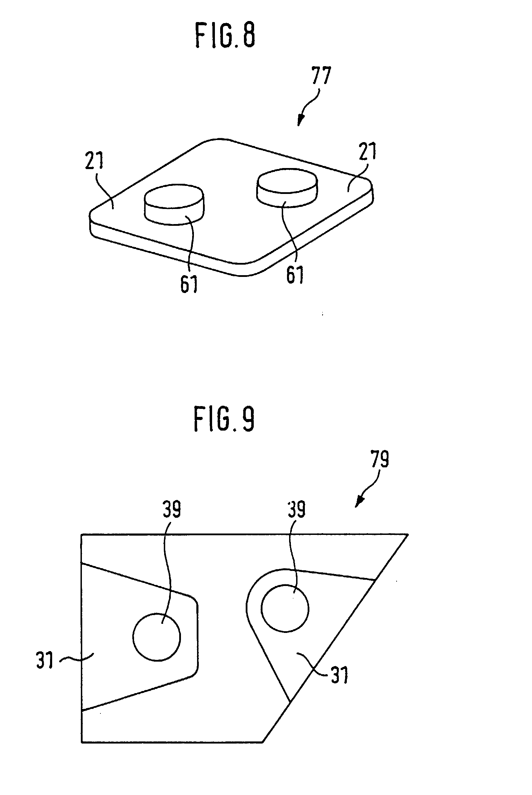

Figur 8 zeigt ein gerades Zwischenkoppelstück 77, das im Grunde aus zwei Rücken an Rücken befindlichen Stecklaschen 21 besteht, die mit je einem Rastnoppen 61 versehen sind. Jede der Stecklaschen 21 des Zwischenkoppelstücks 77 ist in eine Stecktasche 31 eines Koppelstücks steckbar und darin verrastbar.

Figur 9 zeigt ein Winkelkoppelstück 79, dessen in Figur 9 linke Seite unter einem rechten Winkel und dessen in Figur 9 rechte Seite unter einem von einem rechten Winkel unterschiedlichen Winkel quer zu den Längsseitenrändern des Winkelkoppelstücks 79 verläuft. An jedem Längsende des Winkelkoppelstücks 79 befindet sich eine Stecktasche 31, derart, daß die Längsmittellinien und damit die Steckrichtungen der beiden Taschen 31 in einem Winkel zueinander verlaufen.

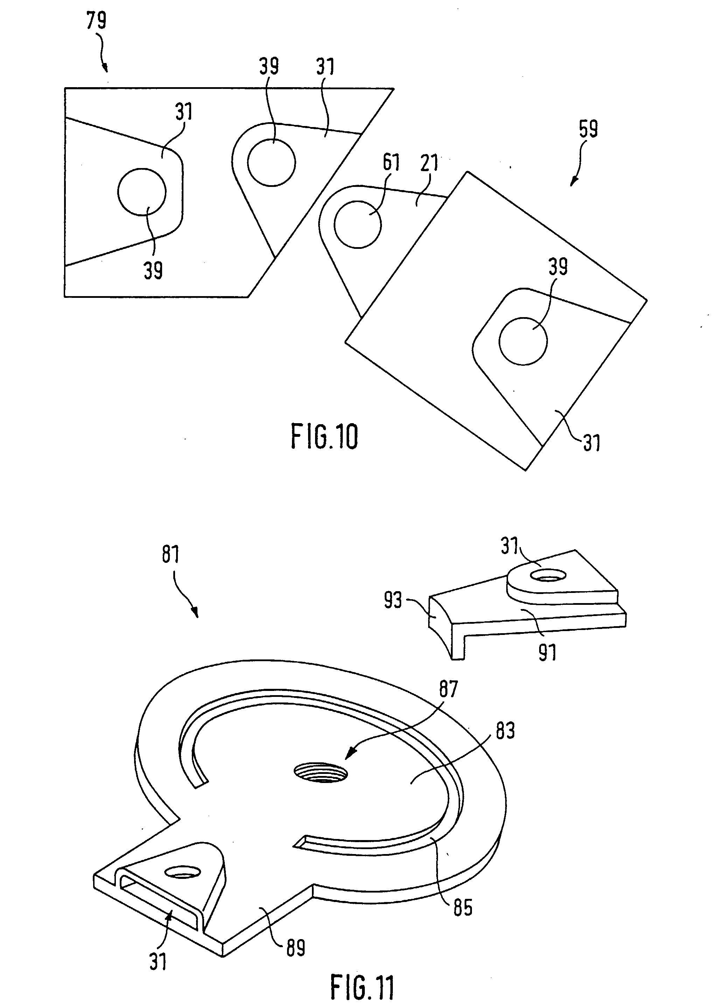

Figur 10 zeigt ein Winkelkoppelstück 79 der in Figur 9 gezeigten Art und ein gerades Koppelstück 59 der in Figur 5 gezeigten Art vor dem Zusammenstecken. Nach deren Zusammenstecken ermöglichen die beiden Koppelstücke 59 und 79 das Koppeln zweier Leitungsaufnahmekanäle unter einem Winkel, der durch den Winkelverlauf des in Figur 9 rechten Endes des Winkelkoppelstücks 79 definiert ist.

Bei Verwendung der beiden in Figur 10 gezeigten Koppelstücke 59 und 79 ist der Winkel, mit welchem die damit gekoppelten Leitungsaufnahmekanäle zueinander verlaufen, durch den Hersteller des Winkelkoppelstücks 79 vorgegeben. Figur 11 zeigt eine Ringkoppelvorrichtung 81, die es dem Anwender erlaubt, einen nahezu beliebigen Winkel zwischen den beiden zu koppelnden Leitungsaufnahmekanälen einzustellen. Zu diesem Zweck besitzt die Ringkoppelvorrichtung 81 einen Ringplattenteil 83 mit einer teilringförmigen Nut 85 und einer zentralen Verankerungsöffnung 87, beispielsweise in Form eines Gewindeloches für eine Schraube, und einen von dem Ringplattenteil 83 wegstehenden Stegteil 89, an dessen freiem Ende sich eine Stecktasche 31 befindet. Zu der Ringkoppelvorrichtung 81 gehört außerdem mindestens ein separates Trägerteil 91, das an einem in Figur 11 linken Ende mit einem in die Nut 85 passenden und in der Nut 85 verschiebbaren Winkelfortsatz 93 und an seinem entgegengesetzten Ende mit einer Stecktasche 31 versehen ist.

Zur Herstellung eines gewünschten Koppelwinkels zwischen zwei zu koppelnden Leitungsaufnahmekanälen kann man unter Eingriff des Winkelfortsatzes 93 in die Nut 85 das Trägerteil 91 in die gewünschte Winkelstellung bringen und dann mit einer (nicht dargestellten) Befestigungsvorrichtung in dieser gewählten Winkelstellung an dem Ringplattenteil 83 befestigen. Dies kann beispielsweise mittels einer Befestigungsplatte geschehen, die auf das Trägerteil 91 aufgelegt und mittels der Verankerungsöffnung 87 am Ringplattenteil 83 festgeschraubt wird.

Mit Hilfe dieser Ringkoppelvorrichtung 81 kann man einen Mehrfachabzweig schaffen, indem man in die Nut 85 mehrere Trägerteile 91 einsetzt, diese je in einer gewünschten Winkelstellung fixiert und dann mit der Stecktasche 31 eines jeden dieser Trägerteile 91 die Stecklasche 21 eines Leitungsaufnahmekanals koppelt.

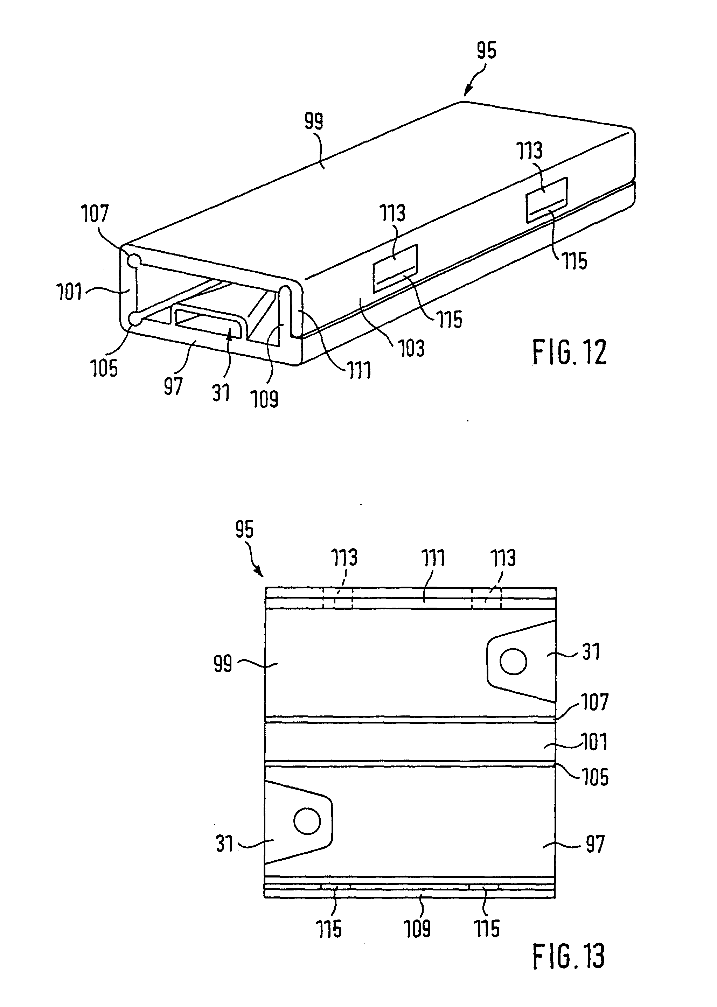

Die Figuren 12 und 13 zeigen ein Wendekoppelstück 95, mit welchem zwei Leitungsaufnahmekanäle miteinander gekoppelt werden können, von denen einer gegenüber dem anderen um seine Längsachse um 180° gedreht ist. Dies kann beispielsweise vorkommen, wenn einer der beiden zu koppelnden Leitungsaufnahmekanäle in einer Vertikalschleife geführt ist, derart, daß bei dem zu koppelnden freien Ende der Kanalboden 13 mit der Stecklasche 21 oben und die Kanaldecke 17 unten liegt.

Figur 12 zeigt das Wendekoppelstück 95 im fertig montieren Zustand, während es in Figur 13 als Flachstück vor dem Zusammensetzen zu seiner endgültigen Kanalform dargestellt ist.

Das fertig montierte Wendekoppelstück 95, wie es Figur 12 zeigt, besitzt einen Bodenbereich 97, einen Deckenbereich 99, einen in Figur 12 links befindlichen einteiligen Seitenbereich 101 und einen in Figur 12 rechts befindlichen zweiteiligen Seitenbereich 103. Der einteilige Seitenbereich 101 ist über ein unteres Filmscharnier 105 mit dem Bodenbereich 97 und über ein oberes Filmscharnier 107 mit dem Deckenbereich 99 verbunden. Der zweiteilige Seitenbereich 103 wird von einem von dem Bodenbereich 97 hochstehenden Innenteil 109 und von einem vom Deckenbereich 99 herabragenden Außenteil 111 gebildet, wobei der Außenteil 111 außerhalb des Innenteils 109 liegt. Der Außenteil 111 ist mit Rastfenstern 113 versehen, in welche Rastclipse 115 eingerastet sind, um das Wendekoppelstück 95 in seiner Kanalform zu halten.

Bei der in Figur 12 dargestellten Ausführungsform weist das Wendekoppelstück 95 an seinem in Figur 12 linken Längsende eine am Bodenbereich 97 angeordnete Stecktasche 31 und an seinem entgegengesetzten Längsende eine am Deckenbereich angeordnete Stecktasche 31 auf. In Figur 12 ist nur die am Bodenbereich 97 befindliche Stecktasche 31 zu sehen.

Die abgewickelte Darstellung des Wendekoppelstücks 95 in Figur 13 zeigt von unten nach oben den Innenteil 109 mit den Rastclipsen 115, den Bodenbereich 97 mit der linken Stecktasche 31, das untere Filmscharnier 105, den einteiligen Seitenbereich 101, das obere Filmscharnier 107, den Deckenbereich 99 mit der rechten Stecktasche 31 und den Außenteil 111 mit den Rastfenstern 113.

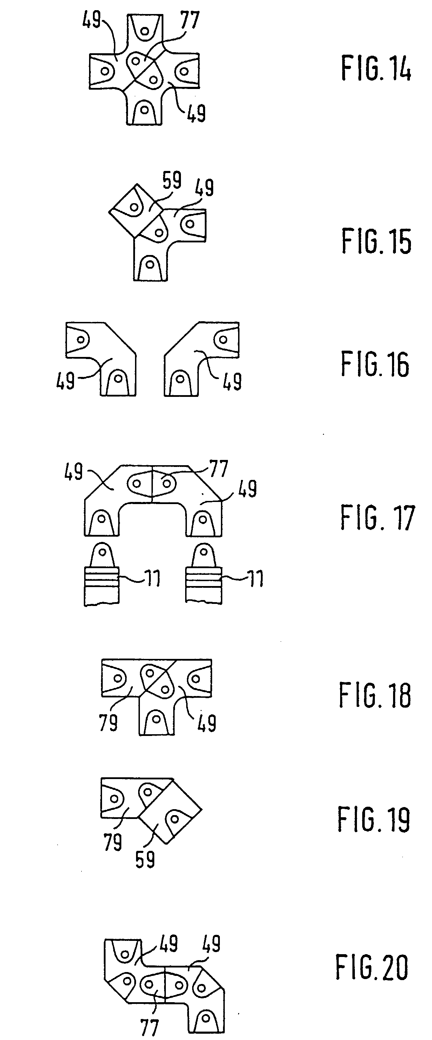

In den Figuren 14 bis 20 werden nun einige Beispiele für Koppelkonfigurationen gezeigt, die mit Koppelbauteilen gemäß der Erfindung erreicht werden können.

Figur 14 zeigt eine Kreuzungskopplung, die zusammengesetzt ist aus zwei Winkelstücken 49 gemäß Figur 4, die mittels eines Zwischenkoppelstückes 77 gemäß Figur 8 miteinander verbunden sind. Mit dieser Koppelkreuzung kann eine kreuzförmige Kopplung von vier Leitungsaufnahmekanälen bewirkt werden.

Figur 15 zeigt eine Abzweigung, die zusammengesetzt ist aus einem Winkelstück 49 gemäß Figur 4 und einem geraden Koppelstück 59 gemäß Figur 5.

Figur 16 zeigt Winkelkopplungen, die je aus einem Winkelstück 49 gemäß Figur 4 bestehen, jedoch mit unterschiedlicher Orientierung des Winkelstücks 49.

Figur 17 zeigt eine Umlenkung, die zusammengesetzt ist aus zwei Winkelstücken 49 gemäß Figur 4, die mittels eines Zwischenkoppelstücks 77 gemäß Figur 8 miteinander verbunden sind. Mit den freien Enden der beiden Winkelstücke 49 sind dann je ein Leitungsaufnahmekanal 11 koppelbar. Alternativ könnten die beiden Winkelstücke 49 an den zueinanderweisenden freien Enden anstatt mit dem Zwischenkoppelstück 77 auch durch ein Leitungsaufnahmekanalstück gekoppelt werden, das beiden Endes je eine Stecklasche 21 aufweist.

Figur 18 zeigt eine T-Kopplung, die zusammengesetzt ist aus einem Winkelstück 49 gemäß Figur 4, einem Winkelkoppelstück 79 gemäß Figur 9 und einem Zwischenkoppelstück 77 gemäß Figur 8.

Figur 19 zeigt eine Winkelkopplung von 135°, die sich zusammensetzt aus einem geraden Koppelstück 59 gemäß Figur 5 und einem Winkelkoppelstück 79 gemäß Figur 9.

Figur 20 zeigt eine Doppelwinkelkopplung, die zusammengesetzt ist aus zwei Winkelstücken 49 gemäß Figur 4, die an ihren zusammenstoßenden Enden mittels eines Zwischenkoppelstücks 77 gemäß Figur 8 verbunden sind. Mit dieser Doppelwinkelkopplung ist beispielsweise eine Parallelversetzung zweier miteinander zu koppelnder Leitungsaufnahmekanäle möglich.

## Patentansprüche

1. Koppelzwischenstück für eine Koppelvorrichtung für Leitungsaufnahmekanäle (11;25;45;47), in welche Leitungen und/oder Kabel zu deren Führung einlegbar sind, welche Leitungsaufnahmekanäle komplementäre, durch Ineinanderstecken miteinander verrastbare Koppelelemente (21,31), die ein Aufnahmekoppelelement mit mindestens einer Stecktasche (31) und ein Steckkoppelelement mit mindestens einer in der Stecktasche (31) aufnehmbaren Stecklasche (21) umfassen, aufweisen,
wobei die Koppelelemente (21,31) an zu koppelnden freien Enden der Leitungsaufnahmekanäle (11;25;45;47) oder an mit diesen freien Enden koppelbaren Koppelstücken (27;49;59;77;79;81,95) angeordnet sind. **dadurch gekennzeichnet**,
daß ein an verschiedenen Seiten mit je einer Stecktasche (31) oder mit je einer Stecklasche (21) versehenes Koppelzwischenstück (77) zur Verbindung zweier Leitungsaufnahmekanäle (11;25;45;47), zweier Leitungsaufnahmekanalstücke (11;25;45;47) und/oder zweier Koppelstücke (27;49;59;79;81;95) vorgesehen ist.

2. Koppelzwischenstück nach Anspruch 1,
**dadurch gekennzeichnet**,
daß das Koppelstück als Winkelstück (49) ausgebildet ist, das sowohl an den freien Enden der beiden Winkelschenkel (53,55) als auch an der Stelle, an welcher die beiden Winkelschenkel (53,55) zusammentreffen, je eine Stecklasche (21) bzw. eine Stecktasche (31) aufweist.

3. Koppelzwischenstück nach Anspruch 1 oder 2
**dadurch gekennzeichnet,**
daß ein Koppelstück (81) mit einstellbarer Winkelbeziehung zwischen mindestens zwei verschiedenen Stecktaschen (31) und/oder Stecklaschen (21) vorgesehen ist.

4. Koppelzwischenstück nach Anspruch 3,
**dadurch gekennzeichnet**,
daß das Koppelstück (81) einen Ringplattenteil (83) mit einer mindestens teilringförmigen Nut (85), einen von dem Ringplattenteil (83) wegstehenden Stegteil (89), an dem eine Stecklasche (21) oder eine Stecktasche (31) vorgesehen ist, und mindestens ein separates Trägerteil (91), das einen Endes mit einem in die Nut (85) passenden und in der Nut (85) verschiebbaren Winkelfortsatz (93) und anderen Endes mit einer Stecktasche (31) oder einer Stecklasche (21) versehen ist, aufweist
und daß das oder jedes separate Trägerteil (91) in einer wählbaren Winkelstellung relativ zu dem Ringplattenteil (83) festlegbar ist.

5. Koppelzwischenstück nach einem der Ansprüche 1 bis 4,
**dadurch gekennzeichnet**,
daß ein Wendekoppelstück (95) mit Kanalprofil vorgesehen ist, das an verschiedenen Seiten mit mindestens je einem Koppelelement (21;31) versehen ist, wobei an der einen Seite das Koppelelement (21;31) am Boden (97) und an der anderen Seite das Koppelelement (21;31) an der Decke (99) des Kanalprofils angeordnet ist.

6. Koppelzwischenstück nach einem der Ansprüche 1 bis 5,
**dadurch gekennzeichnet**,
daß die Stecktasche (31) einen zum Boden des Leitungsaufnahmekanals (11;25;45;47), des Leitungsaufnahmekanalstücks, des Koppelstücks (27;49;59;79;81;95) bzw. des Koppelzwischenstücks (77) parallelen Taschenboden (33), eine dazu parallele Taschendecke (35) und die Seiten von Taschenboden (33) und Taschendecke (35) verbindende Seitenwände (37) aufweist,
daß im Taschenboden (33) und/oder in der Taschendecke (35) ein Stecktaschenrastelement (39) vorgesehen ist,
und daß die Stecklasche (21) eine zum Innenraum der Stecktasche (31) komplementäre Kontur aufweist und mit einem zum Stecktaschenrastelement (39) komplementären, damit verrastbaren Stecklaschenrastelement (23;61) versehen ist.

7. Koppelzwischenstück nach Anspruch 6,
**dadurch gekennzeichnet,**
daß die Rastverbindung zwischen Stecktaschenrastelement (39) und Stecklaschenrastelement (23;61) lösbar ist.

8. Koppelzwischenstück nach Anspruch 6 oder 7,
**dadurch gekennzeichnet**,
daß das Stecktaschenrastelement (39) durch eine in dem Taschenboden(33) und/oder der Taschendecke (35) vorgesehene Rastöffnung (39) und das Stecklaschenrastelement (23;61) durch einen in die Rastöffnung (39) einrastbaren Rastvorsprung (23;61) gebildet sind und daß der Rastvorsprung (23) und/oder die Stecklasche (21) und/oder die Stecktasche (31) federnd nachgiebig ausgebildet ist/sind, derart, daß ein federndes Einrasten des Rastvorsprungs (23;61) in die Rastöffnung (39) ermöglicht ist.

9. Koppelzwischenstück nach Anspruch 8,
**dadurch gekennzeichnet**,
daß der Rastvorsprung durch eine von der Stecklasche (21) schräg hochstehende Rastzunge (23) gebildet ist.

10. Koppelzwischenstück nach Anspruch 8,
**dadurch gekennzeichnet**,
daß der Rastvorsprung durch einen von der Stecklasche (21) hochstehenden Vorsprung (61) mit einer der Form der Rastöffnung (39) entsprechenden Außenkontur gebildet ist.

11. Koppelzwischenstück nach einem der Ansprüche 1 bis 10,
**dadurch gekennzeichnet**,
daß die Stecktasche (31) im Vergleich zur Stecklasche (21) eine derartige Breite und Innenkontur aufweist, daß die in die Stecktasche (31) eingerastete Stecklasche (21) in einer Richtung quer zur Längserstreckungsrichtung des Leitungsaufnahmekanals (11;25;45;47) verschwenkbar ist.

12. Koppelzwischenstück nach einem der Ansprüche 1 bis 10,
**dadurch gekennzeichnet**,
daß die Stecktasche (31) im Vergleich zur Stecklasche (21) eine derartige Breite und Innenkontur aufweist, daß die in die Stecktasche (31) eingerastete Stecklasche (21) im wesentlichen unverschwenkbar in der Stecktasche (31) aufgenommen ist.

13. Koppelzwischenstück nach einem der Ansprüche 1 bis 12,
**dadurch gekennzeichnet**,
daß das Koppelstück, insbesondere bei dessen Ausbildung als Winkelstück (49), mit einem Zugentlastungselement (65) versehen ist, das eine oder mehrere entlang des Koppelstückes (49) geführte Leitungen und/oder Kabel zugentlastet.

14. Koppelzwischenstück nach Anspruch 13,
**dadurch gekennzeichnet**,
daß das Zugentlastungselement (65;66) als separates Bauelement ausgebildet ist, das an einer Seite mit einer Stecklasche (21) oder einer Stecktasche (31) versehen und mit einer Stecktasche (31) bzw. einer Stecklasche (21) des Koppelstückes (49) in Steckrastverbindung bringbar ist und das an einer anderen Seite mit einer Zugentlastungslasche (67;68) versehen ist, die mittels eines quer zur Erstreckungsrichtung der Zugentlastungslasche (67;68) verlaufenden Filmscharniers (71;72) auf sich selbst zu umfaltbar und mit dem Koppelstück (49) verrastbar ist (73,74).

## Claims

1. An intermediate coupling portion for a coupling device for conduit ducts (11; 25; 45; 47) into which conduits and/or cables can be inserted for guiding same, which conduit ducts have complementary coupling elements (21, 31) which can be latched to each other by being plugged into each other and which include a receiving coupling element with at least one plug-in pocket (31) and a plug coupling element with at least one plug-in tongue (21) which can be received in the plug-in pocket (31), wherein the coupling elements (21, 31) are arranged at free ends, which are to be coupled, of the conduit ducts (11; 25; 45; 47) or at coupling portions (27; 49; 59; 77; 79; 81; 95) which can be coupled to said free ends, characterised in that there is provided an intermediate coupling portion (77) provided at different sides with a respective plug-in pocket (31) or with a respective plug-in tongue (21) for connecting two conduit ducts (11; 25; 45; 47), two conduit duct portions (11; 25; 45; 47) and/or two coupling portions (27; 49; 59; 79; 81; 95).

2. An intermediate coupling portion according to claim 1 characterised in that the coupling portion is in the form of an angle portion (49) which has a respective plug-in tongue (21) and a respective plug-in pocket (31) both at the free ends of the two angle limbs (53, 55) and also at the location at which the two angle limbs (53, 55) meet.

3. An intermediate coupling portion according to claim 1 or claim 2 characterised in that there is provided a coupling portion (81) with an adjustable angular relationship between at least two different plug-in pockets (31) and/or plug-in tongues (21).

4. An intermediate coupling portion according to claim 3 characterised in that the coupling portion (81) has an annular plate portion (83) with an at least part-annular groove (85), a leg portion (89) which extends away from the annular plate portion (83) and on which there is provided a plug-in tongue (21) or a plug-in pocket (31), and at least one separate carrier portion (91) which is provided at one end with an angle projection (93) which fits into and is displaceable in the groove (85) and at the other end with a plug-in pocket (31) or a plug-in tongue (21), and that the or each separate carrier portion (91) can be fixed in a selectable angular position relative to the annular plate portion (83).

5. An intermediate coupling portion according to one of claims 1 to 4 characterised in that there is provided a reversing coupling portion (95) with duct profile, which is provided at different sides with at least one respective coupling element (21; 31), wherein at the one side the coupling element (21, 31) is arranged at the bottom (97) of the duct profile and at the other side the coupling element (21, 31) is arranged at the top (99) thereof.

6. An intermediate coupling portion according to one of claims 1 to 5 characterised in that the plug-in pocket (31) has a pocket bottom (33) parallel to the bottom of the conduit duct (11; 25; 45; 47), the conduit duct portion, the coupling portion (27; 49; 59; 79; 81; 95) or the intermediate coupling portion (77) respectively, a pocket top (35) which is parallel to the pocket bottom, and side walls (37) connecting the sides of the pocket bottom (33) and the pocket top (35), that a plug-in pocket retaining element (39) is provided in the pocket bottom (33) and/or in the pocket top (35), and that the plug-in tongue (21) is of a contour complementary to the internal space of the plug-in pocket (31) and is provided with a plug-in tongue retaining element (23; 61) which is complementary to the plug-in pocket retaining element (39) and which is latchable thereto.

7. An intermediate coupling portion according to claim 6 characterised in that the retaining connection between the plug-in pocket retaining element (39) and the plug-in tongue retaining element (23; 61) is releasable.

8. An intermediate coupling portion according to claim 6 or claim 7 characterised in that the plug-in pocket retaining element (39) is formed by a retaining opening (39) provided in the pocket bottom (33) and/or the pocket top (35) and the plug-in tongue retaining element (23; 61) is formed by a retaining projection (23; 61) latchable into the retaining opening (39), and that the retaining projection (23) and/or the plug-in tongue (21) and/or the plug-in pocket (31) is/are of resiliently yielding nature such that resilient engagement of the retaining projection (23; 61) into the retaining opening (39) is made possible.

9. An intermediate coupling portion according to claim 8 characterised in that the retaining projection is formed by a retaining tongue (23) which projects inclinedly upwardly from the plug-in tongue (21).

10. An intermediate coupling portion according to claim 8 characterised in that retaining projection is formed by a projection (61) which projects up from the plug-in tongue (21), the projection (61) being of an external contour corresponding to the shape of the retaining opening (39).

11. An intermediate coupling portion according to one of claims 1 to 10 characterised in that in comparison with the plug-in tongue (21) the plug-in pocket (31) is of such a width and internal contour that the plug-in tongue (21) when engaged into the plug-in pocket (31) is pivotable in a direction transverse with respect to the longitudinal direction in which the conduit duct (11; 25; 45; 47) extends.

12. An intermediate coupling portion according to one of claims 1 to 10 characterised in that in comparison with the plug-in tongue (21) the plug-in pocket (31) is of such a width and internal contour that the plug-in tongue (21) when engaged into the plug-in pocket (31) is substantially non-pivotably accommodated in the plug-in pocket (31).

13. An intermediate coupling portion according to one of claims 1 to 12 characterised in that the coupling portion, in particular when in the form of an angle portion (49), is provided with a traction-relief element (65) which relieves the traction force on one or more conduits and/or cables guided along the coupling portion (49).

14. An intermediate coupling portion according to claim 13 characterised in that the traction-relief element (65; 66) is in the form of a separate component which is provided at one side with a plug-in tongue (21) or a plug-in pocket (31) and which can be brought into plug-in retaining engagement with a plug-in pocket (31) or a plug-in tongue (21) respectively of the coupling portion (49) and which at another side is provided with a traction-relief tongue (67; 68) which can be folded over on to itself by means of a film hinge (71; 72) extending transversely with respect to the direction in which the traction-relief tongue (67; 68) extends, and is latchable (73, 74) to the coupling portion (49).

## Revendications

1. Raccord de couplage destiné à un dispositif de couplage pour des canaux (11 ; 25 ; 45 ; 47) de réception de lignes, dans lesquels des lignes et/ou des câbles peuvent être insérés pour leur guidage, lesquels canaux de réception de lignes comportent des éléments de couplage (21, 31) complémentaires pouvant être encliquetés par emboîtement les uns dans les autres, qui englobent un élément de couplage de réception comportant au moins une poche d'enfichage (31), et un élément de couplage d'enfichage comportant au moins une éclisse d'enfichage (21) pouvant être logée dans la poche d'enfichage (31),
les éléments de couplage (21, 31) étant disposés sur des extrémités libres à coupler des canaux (11 ; 25 ; 45 ; 47) de réception de lignes, ou sur des pièces de couplage (27 ; 49 ; 59 ; 77 ; 79 ; 81 ; 95) pouvant être couplées avec ces extrémités libres,
caractérisé en ce que
un raccord de couplage (77) muni de différents côtés d'une poche d'enfichage (31) ou d'une éclisse d'enfichage (21) est prévu pour la liaison de deux canaux (11 ; 25 ; 45 ; 47) de réception de lignes, de deux tronçons de canaux (11 ; 25 ; 45 ; 47) de réception de lignes et/ou de deux pièces de couplage (27 ; 49 ; 59 ; 79 ; 81 ; 95).

2. Raccord de couplage selon la revendication 1,
caractérisé en ce que
la pièce de couplage est réalisée sous la forme d'une pièce d'angle (49), laquelle comporte une éclisse d'enfichage (21) ou une poche d'enfichage (31), non seulement au niveau des extrémités libres des deux branches (53, 55) de l'angle, mais également au niveau où les deux branches (53, 55) de l'angle se rejoignent.

3. Raccord de couplage selon la revendication 1 ou 2,
caractérisé en ce que
une pièce de couplage (81) de distribution angulaire réglable est prévue entre au moins deux différentes poches d'enfichage (31) et/ou éclisses d'enfichage (21).

4. Raccord de couplage selon la revendication 3,
caractérisé en ce que
la pièce de couplage (81) comporte un élément de plaque annulaire (83) avec une rainure (85) de forme au moins semi-annulaire, un élément de barrette (89) écarté de l'élément de plaque annulaire (83) sur lequel est prévu une éclisse d'enfichage (21) ou une poche d'enfichage (31), et au moins un élément de support séparé (91) qui, sur l'une de ses extrémités est muni d'un prolongement angulaire (93) s'adaptant dans la rainure (85) et pouvant se déplacer dans la rainure (85), et sur l'autre extrémité d'une poche d'enfichage (31) ou d'une éclisse d'enfichage (21), et en ce que l'élément ou chaque élément de support séparé (91) peut être bloqué par rapport à l'élément de plaque annulaire (83) dans une position angulaire pouvant être choisie.

5. Raccord de couplage selon l'une des revendications 1 à 4,
caractérisé en ce que
il est prévu une pièce de couplage d'inversion (95) à profil de canal muni de différents côté d'au moins un élément de couplage (21 ; 31), l'élément de couplage (21 ; 31) étant disposé d'un côté sur le fond (97), alors que de l'autre côté, l'élément de couplage (21 ; 31) est disposé sur le dessus (99) du profil de canal.

6. Raccord de couplage selon l'une des revendications 1 à 5,
caractérisé en ce que
la poche d'enfichage (31) comporte un fond (33) de poche qui est parallèle au fond du canal (11 ; 25 ; 45 ; 47) de réception de lignes, au tronçon de canal de réception de lignes, à la pièce de couplage (27 ; 49 ; 59 ; 79 ; 81 ; 95) ou au raccord de couplage (77), et un dessus (35) de poche qui y est parallèle, et que les côtés du fond (33) de poche et du dessus (35) de poche comportent des parois latérales (37) de liaison,
un élément d'encliquetage (39) de poche d'enfichage est prévu dans le fond (33) de poche et/ou dans le dessus (35) de poche, et
l'éclisse d'enfichage (21) comporte un contour qui est complémentaire à l'espace intérieur de la poche d'enfichage (31), et est munie d'un élément d'encliquetage (23 ; 61) d'éclisse d'enfichage qui est complémentaire à l'élément d'encliquetage (39) de la poche d'enfichage, et qui peut être encliqueté avec ce dernier.

7. Raccord de couplage selon la revendication 6,
caractérisé en ce que
la liaison par encliquetage entre l'élément d'encliquetage (39) de la poche d'enfichage et l'élément d'encliquetage (23 ; 61) de l'éclisse d'enfichage est amovible.

8. Raccord de couplage selon la revendication 6 ou 7,
caractérisé en ce que
l'élément d'encliquetage (39) de la poche d'enfichage est formé par un orifice d'encliquetage (39) prévu dans le fond (33) de poche et/ou dans le dessus (35) de poche, et que l'élément d'encliquetage (23 ; 61) de l'éclisse d'enfichage est formé par une saillie d'encliquetage (23 ; 61) pouvant être encliquetée dans l'orifice d'encliquetage (39), et en ce que la saillie d'encliquetage (23) et/ou l'éclisse d'enfichage (21) et/ou la poche d'enfichage (31) est/sont élastiquement souples, de telle sorte que la saillie d'encliquetage (23 ; 61) puisse être encliquetée élastiquement dans l'orifice d'encliquetage (39).

9. Raccord de couplage selon la revendication 8,
caractérisé en ce que
la saillie d'encliquetage est formée par une languette d'encliquetage (23) dépassant obliquement de l'éclisse d'enfichage (21).

10. Raccord de couplage selon la revendication 8,
caractérisé en ce que
la saillie d'encliquetage est formée par une saillie (61) dépassant de l'éclisse d'enfichage (21), dont le contour extérieur correspond à la forme de l'orifice d'encliquetage (39) .

11. Raccord de couplage selon l'une des revendications 1 à 10,
caractérisé en ce que,
par rapport à l'éclisse d'enfichage (21), la largeur et le contour intérieur de la poche d'enfichage (31) sont tels que l'éclisse d'enfichage (21) encliquetée dans la poche d'enfichage (31) peut pivoter dans une direction transversale à la direction de l'extension longitudinale du canal (11 ; 25 ; 45 ; 47) de réception de lignes.

12. Raccord de couplage selon l'une des revendications 1 à 10,
caractérisé en ce que,
par rapport à l'éclisse d'enfichage (21), la largeur et le contour intérieur de la poche d'enfichage (31) sont tels que l'éclisse d'enfichage (21) encliquetée dans la poche d'enfichage (31) est essentiellement logée dans la poche d'enfichage (31) sans pouvoir pivoter.

13. Raccord de couplage selon l'une des revendications 1 à 12,
caractérisé en ce que
la pièce de couplage, notamment lorsqu'elle est réalisée sous la forme d'une pièce d'angle (49), est munie d'un élément de soulagement de traction (65), qui soulage en traction une ou plusieurs lignes et/ou câbles guidés le long de la pièce de couplage (49).

14. Raccord de couplage selon la revendication 13,
caractérisé en ce que
l'élément de soulagement de traction (65 ; 66) est réalisé en tant que composant séparé, qui est muni d'un côté d'une éclisse d'enfichage (21) ou d'une poche d'enfichage (31), qui peut être relié par encliquetage à une poche d'enfichage (31) ou à une éclisse d'enfichage (21) de la pièce de couplage (49), et qui est muni d'un autre côté d'une éclisse de soulagement de traction (67 ; 68), cette dernière pouvant être repliée sur elle-même et encliquetée (73, 74) avec la pièce de couplage (49) au moyen d'une charnière film (71 ; 72) s'étendant transversalement à la direction de l'extension de l'éclisse de soulagement de traction (67 ; 68).
